# EUROPEAN PATENT SPECIFICATION

(11) **EP 3 444 665 B1**
(45) Date of publication and mention of the grant of the patent: **30.12.2020**
(21) Application number: 17782289.7
(22) Date of filing: 05.04.2017
(51) Int. Cl.: G02F 1/163, G02F 1/1334, G02F 1/157

(54) **DISPLAY DEVICE COMPRISING AN ELECTROCHROMIC ELEMENT WHICH IS SUITABLE FOR A VEHICLE**
ANZEIGEGERÄT MIT EINEM ELEKTROCHROMISCHEN ELEMENT, DAS SICH FÜR EIN FAHRZEUG EIGNET
SYTÈME D'AFFICHAGE COMPRENANT UN ÉLÉMENT ÉLECTROCHROMIQUE ADAPTÉ À UN VÉHICULE

(30) Priority: 11.04.2016 JP 2016078954
(43) Date of publication of application: 20.02.2019
(73) Proprietor: Toppan Printing Co., Ltd., Taito-ku Tokyo (JP)
(72) Inventor: YOSHIDA, Motohiko, Hino-shi Tokyo 191-0065 (JP)
(74) Representative: Nederlandsch Octrooibureau
(86) International application number: PCT/JP2017/014258
(87) International publication number: WO 2017/179472

(56) References cited:
- WO-A1-2005/124444
- WO-A1-2013/051360
- WO-A1-2014/017344
- DE-A1-102011 015 950
- JP-A- H06 504 635
- JP-A- 2002 090 782
- JP-A- 2010 066 767
- JP-A- 2012 173 449
- JP-A- 2015 055 805
- US-A- 5 416 617
- US-A1- 2014 320 782
- US-A1- 2015 325 163

## Description

### FIELD

The present invention relates to a display device that comprises an electrochromic element and is suitable for a vehicle.

### BACKGROUND OF THE INVENTION

Display devices for all weather conditions (for both outdoor and indoor use, and/or for both day and night) are needed for apparatuses that support drivers of vehicles, apparatuses that display information in places facing to the outside, or the like. Transmissive display devices may be designed to be an all-weather type by using a high-luminance light source that exceeds an outside light intensity, such as sunlight. In this case, however, the power consumption of the light source increases. Therefore, such devices need to have a function of taking in the outside light, namely, a reflecting and/or scattering function. However, it is hard to provide all of transmissive, reflective, and scattering functions to a display panel alone, and it is hard to make a display device that exhibits favorable display properties in all weather conditions.

### CITATION LIST

### PATENT LITERATURE

Patent Literature: Jpn. Pat. Appln. KOKAI Publication No. H10-282489, US2015/325163 A1, US5,416,617 A, and WO2005/124444 A1. JP H10-282 489 discloses a reflection-type liquid crystal display device having a tunable reflector which can be an electrochromic element. US 2015 / 325 163 A1 discloses a two-panel display device which allows a background object to be seen through the display when it is not displaying an image and to block the view of the background object when it is displaying an image. US 5 416 617 A discloses a diffusive display screen for a projection display. The screen combines a polymer dispersed liquid crystal cell with an electrochromic one. WO 2005 / 124 444 A1 illustrates the application of an electrochromic film display device to a windscreen.

### SUMMARY

### TECHNICAL PROBLEM

The present invention provides a display device that is capable of achieving favorable display properties independently of the intensity of an outside light.

### SOLUTION TO PROBLEM

According to the present invention, there is provided a display device according to claim 1. Further embodiments of the invention are defined in the dependent claims.

### ADVANTAGEOUS EFFECTS OF INVENTION

According to the present invention, a display device that is capable of achieving favorable display properties independently of the intensity of an outside light can be provided.

### BRIEF DESCRIPTION OF THE DRAWING(S)

FIG. 1 is a plan view of a display device according to an embodiment.
FIG. 2 is a cross-sectional view of the display device taken along line A-A' shown in FIG. 1.
FIG. 3 is a cross-sectional view of the display device taken along line B-B' shown in FIG. 1.
FIG. 4 is a cross-sectional view of a first display panel and a second display panel.
FIG. 5 is a plan view of the display device with a case.
FIG. 6 is a bottom view of the display device with a case.
FIG. 7 is a cross-sectional view of the display device taken along line A-A' shown in FIGS. 5 and 6.
FIG. 8 is a cross-sectional view of the display device taken along line B-B' shown in FIGS. 5 and 6.
FIG. 9 is a block diagram of the display device.
FIG. 10 is a diagram illustrating an example of the placement of the display device.
FIG. 11 is a diagram illustrating another example of the placement of the display device.
FIG. 12 is a flowchart illustrating an operation of the display device.
FIG. 13 is a diagram illustrating an operation of the display device in an indoor mode.
FIG. 14 is a diagram illustrating an operation of the display device in a daytime mode.
FIG. 15 is a schematic diagram illustrating the operation of the display device in the daytime mode.
FIG. 16 is a diagram illustrating an operation of the display device in a nighttime mode.
FIG. 17 is a schematic diagram illustrating the operation of the display device in the nighttime mode.
FIG. 18 is a diagram illustrating an operation of a display device according to a modification.

### DETAILED DESCRIPTION

A description will now be given of the embodiments with reference to the accompanying drawings. It should be noted that the drawings are schematic or conceptual, and the dimensions and scales of the drawings are not necessarily the same as the actual products. Where the same portion is depicted in different drawings, the dimensions and scale of one drawing may be different from those of another. Several embodiments described below merely show exemplary apparatuses that illustrate the present invention. In the description below, structural elements having substantially the same functions and configurations will be denoted by the same reference symbols, and a repetitive description of such elements will be given only where necessary.

### [1] Configuration of Display Device

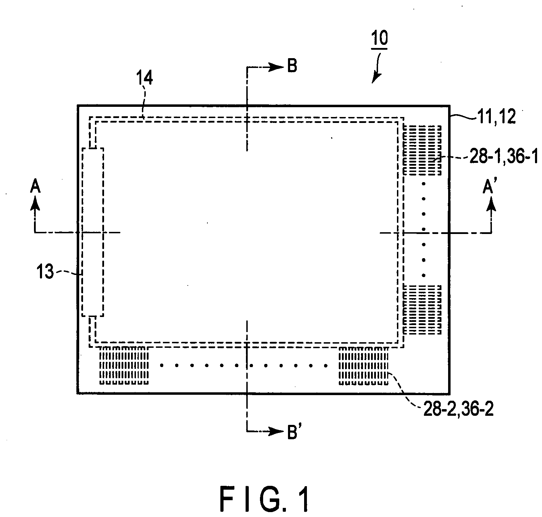

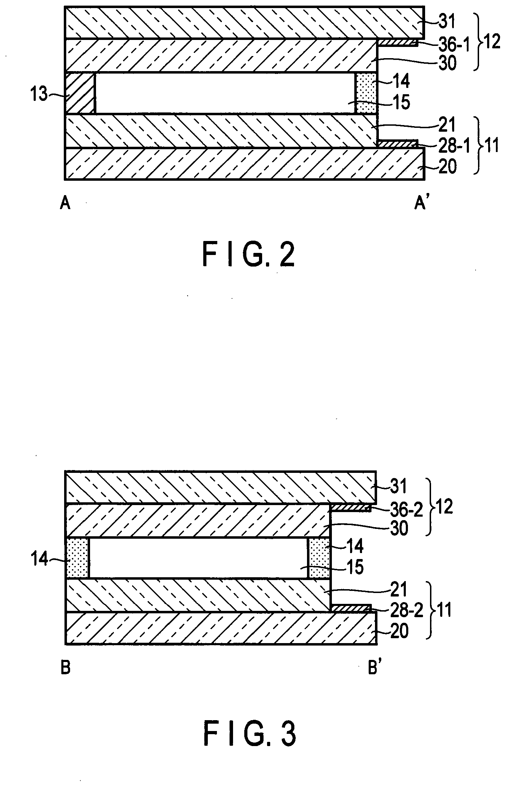

FIG. 1 is a plan view of a display device 10 according to an embodiment of the present invention. FIG. 2 is a cross-sectional view of the display device 10 taken along line A-A' shown in FIG. 1. FIG. 3 is a cross-sectional view of the display device 10 taken along line B-B' shown in FIG. 1.

The display device 10 includes a transmissive first display panel 11 and a transmissive second display panel 12. The first display panel 11 and the second display panel 12 are bonded together by an adhesive member (seal member) 14. An air layer 15 is provided between the first display panel 11 and the second display panel 12. Simplified views of the first display panel 11 and the second display panel 12 with only two substrates, respectively, are shown in FIGS. 2 and 3.

The first display panel 11 and the second display panel 12 are pattern display-type display panels that are capable of displaying a letter or a figure (collectively referred to as a character) made of a predetermined pattern.

The first display panel 11 is formed of an electrochromic element utilizing an electrochromism phenomenon. The electrochromism phenomenon refers to a phenomenon in which a reversible redox reaction occurs upon application of a voltage and a color is reversibly changed. A display element utilizing coloration/decoloration of an electrochromic compound that brings about the electrochromism phenomenon is the electrochromic element. A specific configuration of the first display panel 11 will be described later.

The second display panel 12 is formed of a display element of a polymer dispersed liquid crystal (PDLC) or a polymer network liquid crystal (PNLC). A specific configuration of the second display panel 12 will be described later.

A light source unit 13 is provided between the first display panel 11 and the second display panel 12 and on one side portion (one side) of the second display panel 12. In other words, the light source unit 13 is placed in a space which is formed between the first display panel 11 and the second display panel 12 by the seal member 14. The light source unit 13 is formed of a sidelight (sidelight illuminating device). The sidelight is also called an edge light. The light source unit 13 includes a plurality of LEDs (light-emitting diodes) arranged in line. The number of LEDs is not limited to a plurality; a single LED may be used. Used as the LED is a white LED, or an RGB-LED employing three types of LEDs that emit light with three primary colors of red, green, and blue, respectively. The light source unit 13 may use a cold-cathode tube (CCFL: Cold Cathode Fluorescent Lamp) or a fluorescent lamp.

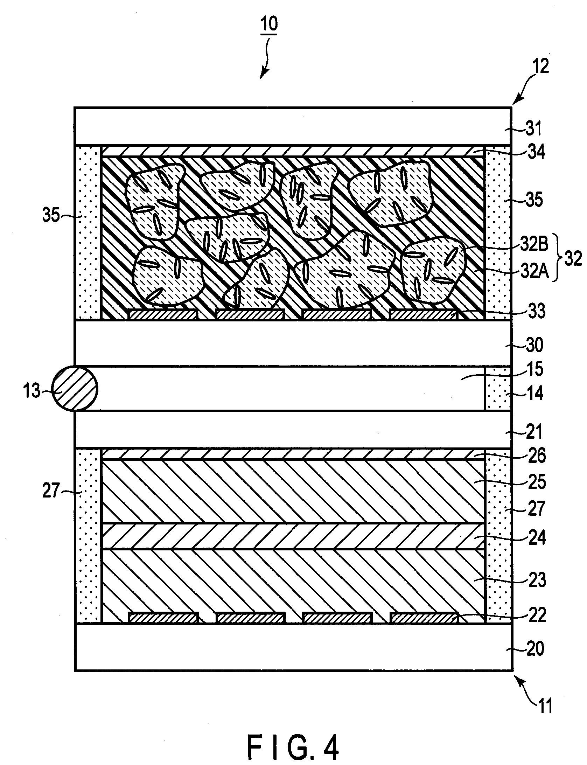

FIG. 4 is a cross-sectional view of the first display panel 11 and the second display panel 12.

### (Configuration of First Display Panel 11)

The first display panel 11 includes a first substrate 20 and a second substrate 21. The first substrate 20 and the second substrate 21 are each formed of a transparent substrate, and, for example, a glass substrate is used. The first substrate 20 and the second substrate 21 are bonded together by a seal member 27.

A plurality of display electrodes 22 are provided on the first substrate 20. Each of the display electrodes 22 is formed of a transparent electrode, and, for example, ITO (indium tin oxide) is used. Each of the display electrodes 22 functions as an anode. The plurality of display electrodes 22 are processed into a shape that can display a desired character.

A first electrochromic layer 23 on an anode side is provided on the first substrate 20 and the plurality of display electrodes 22. An electrolyte layer 24 is provided on the first electrochromic layer 23. A second electrochromic layer 25 on a cathode side is provided on the electrolyte layer 24.

A common electrode 26 is provided on the second substrate 21. The common electrode 26 is formed in a flat shape on the entire display area of the first display panel 11. The common electrode 26 is formed of a transparent electrode, and, for example, ITO is used. The common electrode 26 functions as a cathode. The common electrode 26 is formed to contact the second electrochromic layer 25.

The first electrochromic layer 23 and the second electrochromic layer 25 each include an electrochromic material that reversibly changes its color by a redox reaction. Publicly-known electrochromic compounds such as organic electrochromic compounds and inorganic electrochromic compounds can be used as the electrochromic material. Examples of the organic electrochromic compounds include viologen compounds and terephthalic acid compounds. Examples of the inorganic electrochromic compounds include tungsten oxide, molybdenum oxide, iridium oxide, and titanium oxide.

More specifically, as an example of the electrochromic layers, Prussian blue can exhibit a blue-colored state. Tungsten oxide can exhibit a blue-colored state. Iridium oxide can exhibit a blue-colored state. Manganese dioxide can exhibit a browned state. An iron-bathophenanthroline complex can exhibit a red-colored state.

The electrolyte layer 24 is formed of an electrolyte having ion-conductivity. For example, a liquid electrolyte of an ion liquid, etc., or a solution made by dissolving a solid electrolyte in a solvent is used as the electrolyte layer 24. In view of the strength and reliability of the element, the electrolyte layer 24 is preferably solid, and the electrolyte layer 24 can also be a film formed by optically or thermally curing a coat of a solution containing an electrolyte mixed in a curable resin.

A plurality of interconnections 28 (28-1 and 28-2) are provided on the first substrate 20, as shown in FIGS. 1 to 3. The plurality of interconnections 28 are electrically connected to the plurality of display electrodes 22 and the common electrode 26. The plurality of interconnections 28 may be provided on the second substrate 21.

### (Configuration of Second Display Panel 12)

The second display panel 12 includes a third substrate 30 and a fourth substrate 31, as shown in FIG. 4. The third substrate 30 and the fourth substrate 31 are each formed of a transparent substrate, and, for example, a glass substrate is used. A liquid crystal layer 32 is provided between the third substrate 30 and the fourth substrate 31. The liquid crystal layer 32 is enclosed in a space between the third substrate 30 and the fourth substrate 31 by a seal member 35.

According to the invention, the liquid crystal layer 32 is formed of a polymer dispersed liquid crystal (PDLC). The PDLC has a structure in which liquid crystal droplets 32B are dispersed in a polymer layer 32A, that is, a structure in which the liquid crystal droplets 32B are phase-separated in the polymer layer 32A.

Whether a liquid crystal material has a continuous phase or is phase-separated is determined according to a blending ratio between the liquid crystal material and a polymeric material. For example, if a proportion of the polymeric material is small, the liquid crystal material has a continuous phase, and if a proportion of the polymeric material is large, the liquid crystal material is phase-separated. A photocurable resin may be used as the polymer layer. For example, for the PDLC, a solution obtained by mixing a photopolymerizable polymer precursor (monomer) with a liquid crystal material is irradiated with ultraviolet light to polymerize the monomer and form a polymer, so that the liquid crystal material is dispersed in the polymer.

For example, a positive (P-type) nematic liquid crystal is used as the liquid crystal material of the liquid crystal layer 32. Namely, a long axis (director) of the liquid crystal molecules is randomly oriented when no electric field (no voltage) is applied; and the director of the liquid crystal molecules is oriented approximately perpendicularly to a surface of the substrate when an electric field (voltage) is applied.

A plurality of display electrodes 33 are provided on a liquid crystal layer 32 side of the third substrate 30. Each of the display electrodes 33 is formed of a transparent electrode, and, for example, ITO is used. The plurality of display electrodes 33 are processed into a shape that can display a desired character. Also, the plurality of display electrodes 33 of the second display panel 12 have the same shape as that of the plurality of display electrodes 22 of the first display panel 11. Namely, the plurality of display electrodes 33 and the plurality of display electrodes 22 mostly overlap with each other in a planar view. Therefore, the first display panel 11 and the second display panel 12 are configured to be able to display the same character.

A common electrode 34 is provided on the fourth substrate 31. The common electrode 34 is formed in a flat shape on the entire display area of the second display panel 12. The common electrode 34 is formed of a transparent electrode, and, for example, ITO is used.

A plurality of interconnections 36 (36-1 and 36-2) are provided on the fourth substrate 31, as shown in FIGS. 1 to 3. The plurality of interconnections 36 are electrically connected to the plurality of display electrodes 33 and the common electrode 34. The plurality of interconnections 36 may be provided on the third substrate 30.

### [2] Example of Overall Configuration of Display Device 10

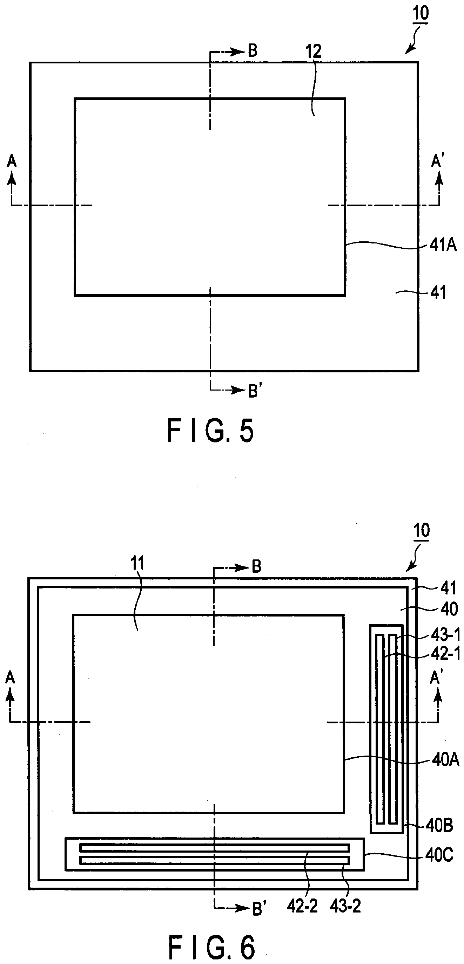

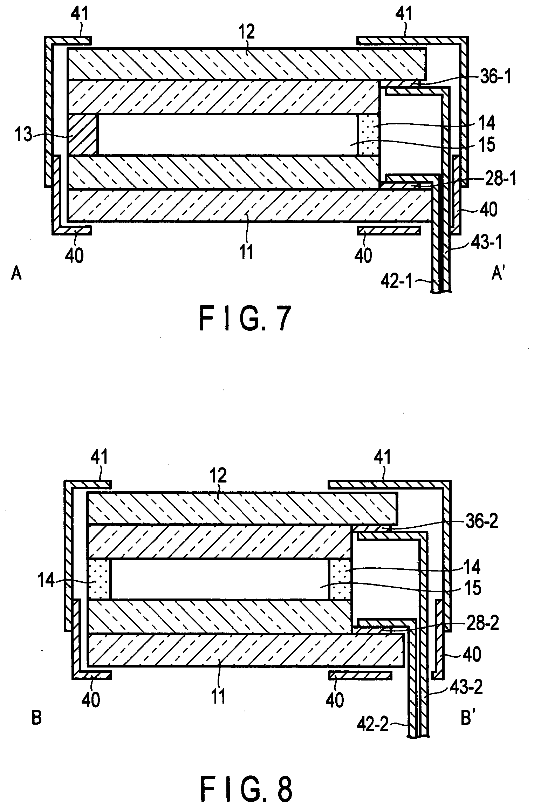

Next, an example of an overall configuration of the display device 10 will be described. FIG. 5 is a plan view of the display device 10 with a case. FIG. 6 is a bottom view of the display device 10 with a case. FIG. 7 is a cross-sectional view of the display device 10 taken along line A-A' shown in FIGS. 5 and 6. FIG. 8 is a cross-sectional view of the display device 10 taken along line B-B' shown in FIGS. 5 and 6.

A lower case 40 accommodates the first display panel 11 and the second display panel 12. A (planar) contour of the lower case 40 seen from above is, for example, quadrilateral. The lower case 40 has a size that allows accommodation of the first display panel 11 and the second display panel 12. In other words, the lower case 40 has a bottom plate and four side plates, and is shaped like a box without a lid.

Three openings 40A, 40B, and 40C are provided to the bottom plate of the lower case 40. The opening 40A is provided in a central portion of the bottom plate of the lower case 40; the opening 40B is provided at one end of the bottom plate of the lower case 40; and the opening 40C is provided at another end of the bottom plate of the lower case 40. The opening 40A allows light from the first display panel 11 to pass therethrough. A size of the opening 41A is set to be the same as or slightly larger than that of the display area of the first display panel 11.

The opening 40B is used to draw interconnection portions 42-1 and 43-1 to the outside. The interconnection portion 42-1 is electrically connected to the plurality of interconnections 28-1. The interconnection portion 43-1 is electrically connected to the plurality of interconnections 36-1. The opening 40C is used to draw interconnection portions 42-2 and 43-2 to the outside. The interconnection portion 42-2 is electrically connected to the plurality of interconnections 28-2. The interconnection portion 43-2 is electrically connected to the plurality of interconnections 36-2. The interconnection portions 42-1, 42-2, 43-1, and 43-2 are formed of, for example, a flexible printed circuit (FPC). The lower case 40 is formed of metal or resin.

An upper case 41 is placed over the lower case 40, and is also fixed to the lower case 40. The upper case 41 has a contour slightly larger than that of the lower case 40. Namely, an inner size of the upper case 41 is approximately the same as an outer size of the lower case 40. An opening 41A for allowing light entering the second display panel 12 to pass through is provided in a central portion of a top plate of the upper case 41. A size of the opening 41A is set to be the same as or slightly larger than that of the display area of the second display panel 12.

An example of a method of fixing the lower case 40 and the upper case 41 to each other is as described below. Namely, in an area where the lower case 40 and the upper case 41 overlap with each other, a plurality of protrusions (not shown in the drawings) are provided to the lower case 40, and a plurality of openings or a plurality of concave portions (not shown in the drawings) are provided to the upper case 41. One opening of the upper case 41 is placed at a position corresponding to one protrusion of the lower case 40, and has the same size as this protrusion of the lower case 40. The size of one opening of the upper case 41 and the size of one protrusion of the lower case 40 are each, for example, approximately 1 to 2 mm. The plurality of protrusions of the lower case 40 are provided uniformly on four sides of the lower case 40, and the plurality of openings of the upper case 41 are provided uniformly on four sides of the upper case 41. The lower case 40 and the upper case 41 are fixed to each other by engaging the protrusions of the lower case 40 and the openings of the upper case 41 with each other. The lower case 40 and the upper case 41 may also be fixed to each other using a screw, etc.

### [3] Circuit Configuration of Display Device 10

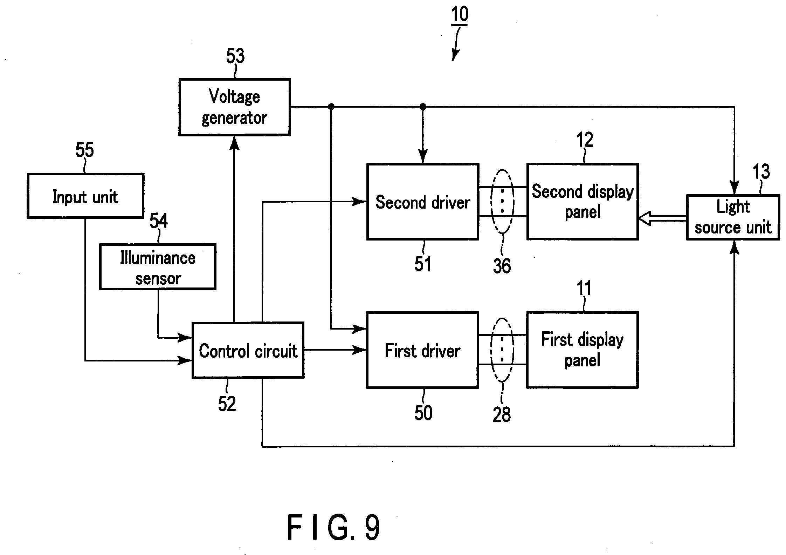

Next, a circuit configuration of the display device 10 will be described. FIG. 9 is a block diagram of the display device 10. The display device 10 includes the first display panel 11, the second display panel 12, the light source unit 13, a first driver 50, a second driver 51, a control circuit 52, a voltage generator 53, an illuminance sensor 54, and an input unit 55.

The first driver 50 is connected to the first display panel 11 via the plurality of interconnections 28. The first driver 50 applies a predetermined voltage to the plurality of display electrodes 22 and the common electrode 26.

The second driver 51 is connected to the second display panel 12 via the plurality of interconnections 36. The second driver 51 applies a predetermined voltage to the plurality of display electrodes 33 and the common electrode 34.

The illuminance sensor 54 measures an ambient illuminance of the first display panel 11 and the second display panel 12. For example, if the display device 10 is installed in a vehicle, the illuminance sensor 54 measures an illuminance ahead of a windshield of the vehicle. The illuminance sensor 54 is placed at a position that allows measurement of the illuminance of the outside of the vehicle (e.g., outside of the windshield). For example, the illuminance sensor 54 is placed on an instrument panel and near the windshield of the vehicle.

The input unit 55 receives a user's instruction (or operation), and is provided with, for example, an element having a shape of a switch and/or an element having a shape of a push button. In the present embodiment, a user can select an operation mode using the input unit 55.

The control circuit 52 controls the operations of the light source unit 13, first driver 50, and second driver 51. The control circuit 52 includes a non-volatile memory that stores, for example, a threshold value described later. The control circuit 52 receives a result of the measurement from the illuminance sensor 54, and controls the operations of the light source unit 13, first driver 50, and second driver 51 based on the result of the measurement. The control circuit 52 also controls the operations of the light source unit 13, first driver 50, and second driver 51 based on the information of the input unit 55.

The voltage generator 53 receives power supply from the outside, and supplies desired voltages to each circuit in the display device 10 using the power supply.

The first driver 50, second driver 51, control circuit 52, and voltage generator 53 may be placed anywhere in the lower case 40 and the upper case 41, or may be placed near the outside of the lower case 40 and the upper case 41.

### [4] Example of Placement of Display Device 10

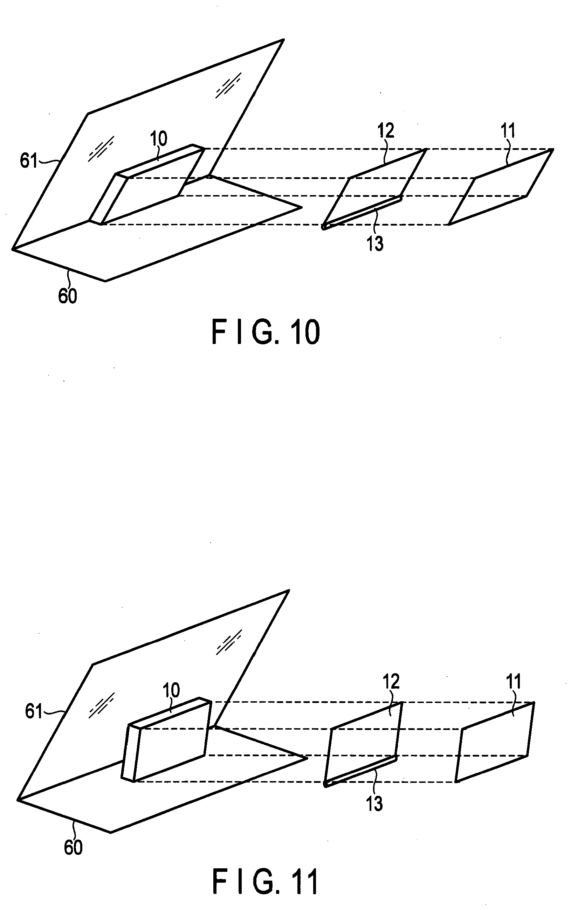

Next, an example of the placement of the display device 10 will be described. FIG. 10 is a diagram illustrating an example of the placement of the display device 10. To show a positional relationship between the first display panel 11 and the second display panel 12, FIG. 10 provides an exploded view of the first display panel 11 and the second display panel 12 included in the display device 10. For example, the display device 10 can be installed in a vehicle.

The display device 10 is placed on an instrument panel 60 and near a windshield 61 of a vehicle. Also, the second display panel 12 is placed on the windshield 61 side, namely, on a side that receives an outside light. A way of fixing the display device 10 may be discretionary, and a dedicated fixing member (not shown in the drawings) may be used to attach the display device 10 to the instrument panel 60.

FIG. 11 is a diagram illustrating another example of the placement of the display device 10. The display device 10 may be placed at a predetermined distance from the windshield 61.

### [5] Operation of Display Device 10

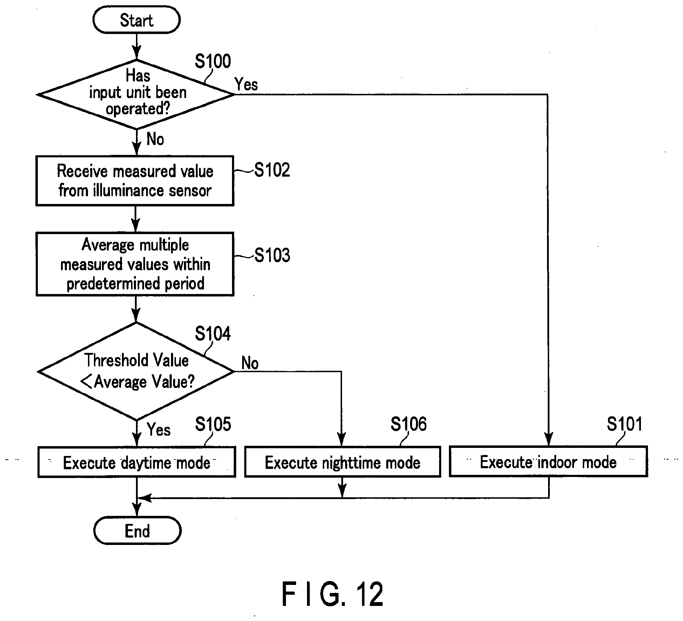

An operation of the display device 10 having the above-described configuration will be described. FIG. 12 is a flowchart illustrating an operation of the display device 10.

The control circuit 52 monitors whether or not the input unit 55 has been operated by a user (step S100). The input unit 55 shown in FIG. 9 has a function (switch, etc.) to receive an operation of the user selecting an operation mode. Also, the input unit 55 is placed at a position where the user (driver) can operate the input unit 55 near the driver's seat.

If the input unit 55 is operated by the user, namely, if an indoor mode is selected using the input unit 55 (step S100: Yes), the control circuit 52 executes the indoor mode (step S101). A specific operation of the indoor mode will be described later.

The illuminance sensor 54 constantly measures an illuminance of the location of the illuminance sensor 54. If the input unit 55 is not operated by the user (step S100: No), the control circuit 52 receives a measured value (measurement result) of the illuminance sensor 54 (step S102).

Then, the control circuit 52 averages multiple measured values received from the illuminance sensor 54 within a predetermined period (step S103). To perform the operation of step S103, the control circuit 52 is, for example, provided with a timer (not shown in the drawings), and measures the aforementioned predetermined period using the timer. The operation of step S103 is repeated for each predetermined period.

For example, even if the illuminance changes greatly for a moment, this sudden change is not reflected to a subsequent operation by averaging the measured values in step S103. As a result, a stable operation of the display device 10 becomes possible. Step S103 is not requisite in the present embodiment. The measurement result received from the illuminance sensor 54 for each predetermined period may be directly used without averaging it.

Subsequently, the control circuit 52 determines whether the average value obtained in step S103 is larger than a threshold value or not (step S104). The threshold value of step S104 is the illuminance for determining whether the illuminance of the outside (also referred to as a background) of a vehicle is bright or dark. Broadly speaking, the control circuit 52 determines whether it is daytime or nighttime in step S104. The threshold value of step S104 is, for example, 1000 lux (lx). The threshold value of step S104 may be set discretionarily according to the specifications required of the display device 10.

If the average value is larger than the threshold value in step S104, namely, if it is determined to be daytime (it is determined that the background is bright), the control circuit 52 executes a daytime mode (step S105). A specific operation of the daytime mode will be described later.

On the other hand, if the average value is less than or equal to the threshold value in step S104, namely, if it is determined to be nighttime (it is determined that the background is dark), the control circuit 52 executes a nighttime mode (step S106). A specific operation of the nighttime mode will be described later.

The operations in the indoor mode (step S101), daytime mode (step S105), and nighttime mode (step S106) will be described more specifically below in the mentioned order.

### (Indoor Mode)

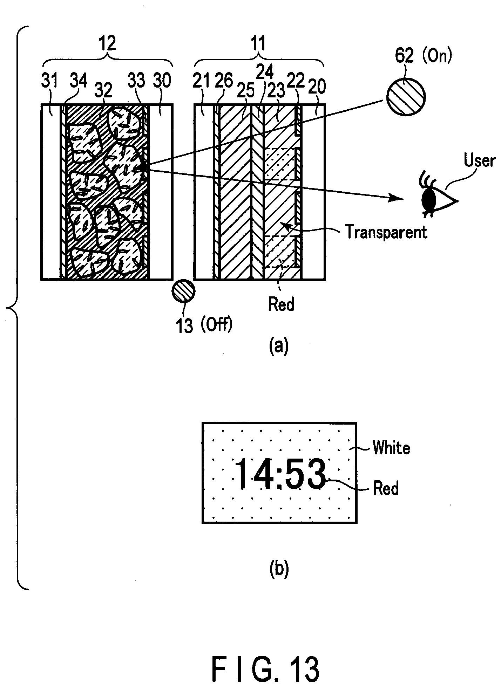

FIG. 13 is a diagram illustrating an operation of the display device 10 in the indoor mode. FIG. 13(a) is a cross-sectional view of the display device 10, and FIG. 13(b) is a diagram showing an example of the content displayed by the display device 10. In the indoor mode, an indoor illumination lamp 62 is turned on, letting an indoor light enter the display device 10 from the second display panel 12 side.

The control circuit 52 turns off the light source unit 13, and also sets the second display panel 12 to a scatter state. Specifically, the second driver 51 applies the same voltage (e.g., 0 V) to the plurality of display electrodes 33 and the common electrode 34. In this case, an electric field is not applied to the liquid crystal layer 32, and a plurality of liquid crystal molecules in the liquid crystal layer 32 are randomly arranged. Thereby, the second display panel 12 comes to be in a scatter state, and the indoor light from the indoor illumination lamp 62 passes through the first display panel 11 to enter the second display panel 12. Also, the indoor light scatters in the second display panel 12, and the scattering light enters the first display panel 11.

The control circuit 52 sets the first display panel 11 to a display state. Specifically, the first driver 50 applies 0 V to the common electrode 26, and applies a positive voltage V1 (e.g., 2 to 5 V) to the plurality of display electrodes 22 located in an area for color display. As a result, the electrochromic layer 23 is reduced in an area applied with an electric field, and the area is colored. Thereby, a predetermined color is displayed. For example, the first display panel 11 displays a character in red. The color of the character displayed by the first display panel 11 can be set discretionarily by changing the electrochromic material. In an area not applied with an electric field, the electrochromic layer 23 is not colored, and an incident light is transmitted (the area is set to be transparent).

FIG. 13(b) shows a clock display as an example. In the indoor mode, the scattering light is visually recognized as white, and thus the red character is displayed with a white background, as shown in FIG. 13(b).

To decolor the colored area, it is sufficient as long as a voltage relationship that causes oxidation of the electrochromic layer is set. For example, to decolor the electrochromic layer 23, approximately -1.2 V to -1.0 V is applied to the cathode (common electrode 26), and 0 V is applied to the anode (display electrodes 22). For example, if tungsten oxide is used as the electrochromic layer, approximately -1.0 V is applied to the cathode (common electrode 26), and 0 V is applied to the anode (display electrodes 22). In the non-colored area, a voltage difference between the common electrode 26 and the display electrodes 22 is 0 V, namely, the same voltage as that applied to the common electrode 26 is applied to the display electrodes 22.

### (Daytime Mode)

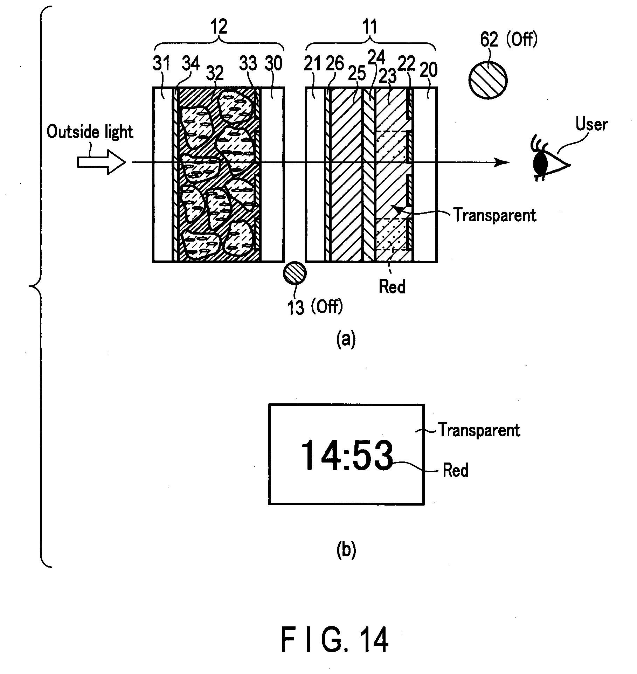

FIG. 14 is a diagram illustrating an operation of the display device 10 in the daytime mode. FIG. 14(a) is a cross-sectional view of the display device 10, and FIG. 14(b) is a diagram showing an example of the content displayed by the display device 10. In the daytime mode, an outside light enters the display device 10 from the second display panel 12 side. The outside light is mainly sunlight.

The control circuit 52 turns off the light source unit 13, and also sets the second display panel 12 to a transmissive state. Specifically, the second driver 51 applies 0 V to the common electrode 34, and applies a positive voltage V2 (e.g., 5 V) to the plurality of display electrodes 33. In this case, an electric field is applied to the liquid crystal layer 32, and the long axes of the liquid crystal molecules in the liquid crystal layer 32 are aligned in a direction of the electric field (a direction perpendicular to the substrate). Thereby, the second display panel 12 comes to be in a transmissive state, and the outside light passes through the second display panel 12 to enter the first display panel 11.

The control circuit 52 sets the first display panel 11 to a display state. This operation is the same as that performed in the indoor mode. Thereby, the electrochromic layer 23 is reduced in an area applied with an electric field, and a predetermined color is displayed.

In the daytime mode, the background becomes transparent, and the red character is displayed in a manner highlighted in this background, as shown in FIG. 14(b). Specifically, a scene outside the windshield is seen in the transparent area shown in FIG. 14(b) from the user side.

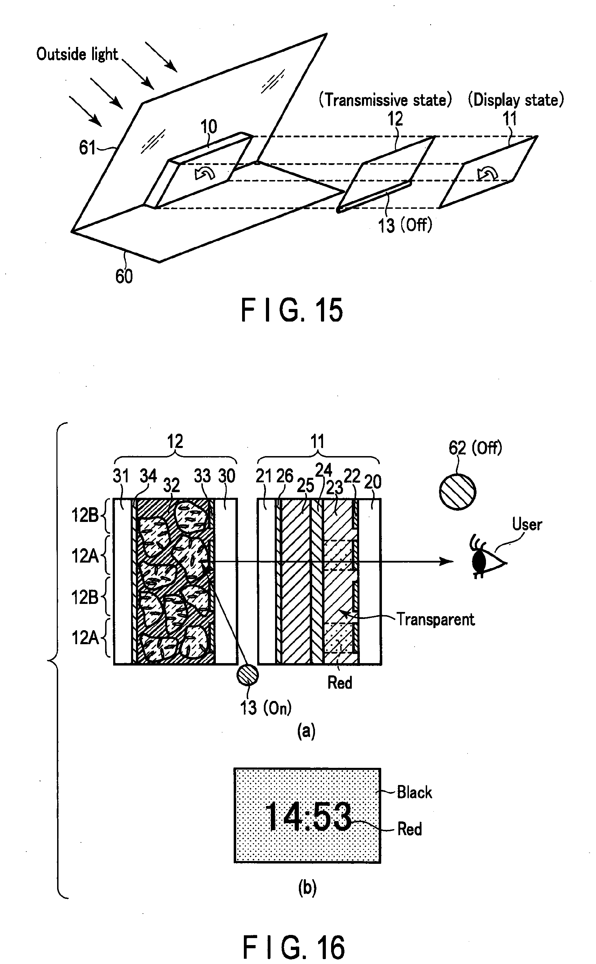

FIG. 15 is a schematic diagram illustrating the operation of the display device 10 in the daytime mode. The first display panel 11 is in a display state (displays a character), the second display panel 12 is in a transmissive state, and the light source unit 13 is turned off; and thereby the character is visually recognized by the user utilizing the amount of outside light. In FIG. 15, an arrow is shown as another example of the character.

### (Nighttime Mode)

FIG. 16 is a diagram illustrating an operation of the display device 10 in the nighttime mode. FIG. 16(a) is a cross-sectional view of the display device 10, and FIG. 16(b) is a diagram showing an example of the content displayed by the display device 10. In the nighttime mode, an outside light hardly enters the display device 10.

The control circuit 52 turns on the light source unit 13, also sets an area 12A of the second display panel 12 that displays a character to a scatter state, and sets the other area 12B of the second display panel 12 to a transmissive state. The area 12A of the second display panel 12 corresponds to the area of the first display panel 11 that displays a color. Specifically, the second driver 51 applies the same voltage (e.g., 0 V) to the plurality of display electrodes 33 and the common electrode 34 in the area 12A. In the area 12B, the second driver 51 applies 0 V to the common electrode 34, and applies the positive voltage V2 (e.g., 5 V) to the plurality of display electrodes 33. Thereby, the light from the light source unit 13 is scattered in the area 12A, and the scattered light enters some areas of the first display panel 11. In the area 12B, the background is visually recognized by the user.

The control circuit 52 sets the first display panel 11 to a display state. This operation is the same as that performed in the indoor mode. Thereby, the electrochromic layer 23 is reduced in an area applied with an electric field, and a predetermined color is displayed.

In the nighttime mode, the background becomes almost black, and the red character is displayed in a manner highlighted in this background, as shown in FIG. 16(b).

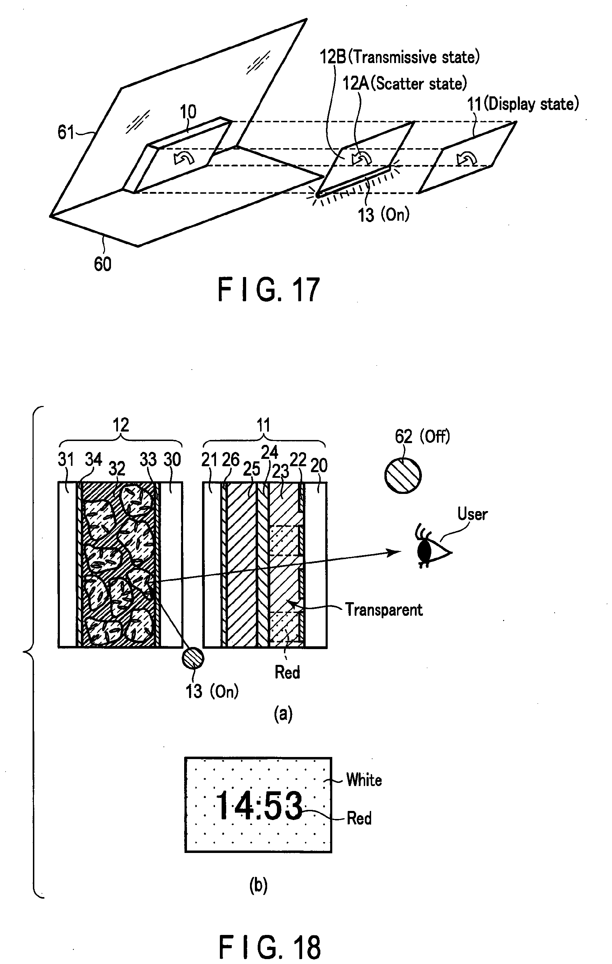

FIG. 17 is a schematic diagram illustrating the operation of the display device 10 in the nighttime mode. The first display panel 11 is in a display state (displays a character), the second display panel 12 is partially in a scatter state, and the light source unit 13 is turned on; and thereby the character is visually recognized by the user utilizing the amount of light of the light source unit 13.

### [6] First Modification

In the nighttime mode, the entire display area of the second display panel 12 may be in a scatter state. FIG. 18 is a diagram illustrating an operation of the display device 10 according to a first modification.

In the nighttime mode, the control circuit 52 turns on the light source unit 13, and also sets the second display panel 12 to a scatter state in the entire display area. In the first modification, the display electrodes 33 need not be processed into a shape of a character, and are formed in a flat shape on the entire display area, as the common electrode 34 is. In the first modification, a red character is displayed with a white background.

In the first modification, even if the display electrodes 33 are formed in a flat shape, the aforementioned indoor mode and daytime mode can be implemented.

In the same manner as shown in FIG. 16, the plurality of display electrodes 33 may be processed into a shape of the character, and the second display panel 12 may be set to a scatter state using all of the display electrodes 33.

### [7] Second Modification

One of the three modes (daytime mode, nighttime mode, and indoor mode) may be selected using the illuminance sensor 54. In the second modification, the control circuit 52 has a first threshold value and a second threshold value having a relationship of "first threshold value < second threshold value."

The control circuit 52 compares the measurement result of the illuminance sensor 54 with the first and second threshold values. The control circuit 52 (1) executes the nighttime mode if the illuminance is lower than the first threshold value, (2) executes the indoor mode if the illuminance is greater than or equal to the first threshold value and is lower than the second threshold value, and (3) executes the daytime mode if the illuminance is greater than or equal to the second threshold value. In the second modification, the input unit 55 need not be provided.

As another modification, a user may select one of the three modes (daytime mode, nighttime mode, and indoor mode) using the input unit 55. In this modification, the illuminance sensor 54 need not be provided.

### [8] Advantageous Effects

In the present embodiment, the display device 10 includes: the first display panel 11 that includes an electrochromic element and has a color state to perform color display and a transmissive state; and the second display panel 12 that includes a polymer dispersed liquid crystal element and has a scatter state to scatter a light and a transmissive state. The second display panel 12 is stacked on the first display panel 11 using the adhesive member 14. The display device 10 also includes the light source unit 13 that is arranged between the first display panel 11 and the second display panel 12 and on one side portion of the second display panel 12, and emits light to the second display panel 12. In the indoor mode where the indoor light is turned on, the first display panel 11 performs color display, the second display panel 12 is set to a scatter state, and the light source unit 13 is turned off. In the daytime mode where an outside light is bright, the first display panel 11 performs color display, the second display panel 12 is set to a transmissive state, and the light source unit 13 is turned off. In the nighttime mode where the outside light is dark, the first display panel 11 performs color display, the second display panel 12 is set to a scatter state, and the light source unit 13 is turned on.

Therefore, according to the present embodiment, the display device 10 that is capable of achieving favorable display properties in all weather conditions (for both outdoor and indoor use, and/or for both day and night) can be provided.

The light source unit 13 is used only in a limited operation mode (nighttime mode). Therefore, power consumption and heat generation by the light source unit 13 can be suppressed.

In the above-described embodiment, the display device that supports drivers of vehicles is shown as an example; however, the embodiment may be applied to display devices used in other forms. For example, the embodiment may be applied to a display device, such as a digital signage, that is placed in an area receiving outside light whether inside or outside, and displays various pieces of information, figures, etc. Also, the display device of the present embodiment is not limited to the aspect of using sunlight, but may be used in such a manner that illumination light selectively enters from both the first display panel 11 side and the second display panel 12 side.

The present invention is not limited to the above-mentioned embodiments but is only limited by the scope of the claims.

## Claims

1. A display device (10) suitable for a vehicle and comprising:
a first display panel (11) that includes an electrochromic element and is configured to exhibit a color state to perform color display or a transmissive state;
a second display panel (12) that includes a polymer dispersed liquid crystal element, is stacked on the first display panel (11), and is configured to exhibit either a scatter state to scatter light or a transmissive state;
a space (15) between the first display panel (11) and the second display panel (12);
a light source unit (13) being located either between the first display panel (11) and the second display panel (12) at one side portion of the space or adjacent the space, such that the light source unit (13) is configured to emit light to the second display panel (12);
an illuminance sensor (54) configured to measure illuminance; and
a control circuit (52) configured to execute a first mode, a second mode, and a third mode according to a result of measurement by the illuminance sensor (54), wherein:
in the first mode, the first display panel (11) performs color display, the second display panel (12) is set to a scatter state, and the light source unit (13) is turned off;
in the second mode, the first display panel (11) performs color display, the second display panel (12) is set to a transmissive state, and the light source unit (13) is turned off; and
in the third mode, the first display panel (11) performs color display, the second display panel (12) is set to a scatter state, and the light source unit (13) is turned on.

2. The display device according to claim 1, further comprising a seal member (14) that bonds the first display panel (11) and the second display panel (12) together.

3. The display device according to claim 1, wherein the light source unit (13) is a sidelight which provides side illumination.

4. The display device according to claim 1, wherein:
the first display panel (11) comprises:
a first substrate (20) and a second substrate (21);
a first display electrode (22) on the first substrate (20);
a first electrochromic layer (23) on the first display electrode (22);
an electrolyte layer (24) on the first electrochromic layer (23);
a second electrochromic layer (25) on the electrolyte layer (24); and
a first common electrode (26) on the second substrate (20), the first common electrode (26) contacting the second electrochromic layer (25); and
the second display panel (12) comprises:
a third substrate (30) and a fourth substrate (31);
a polymer dispersed liquid crystal layer (32) between the third substrate and the fourth substrate (30, 31);
a second display electrode (33) on the third substrate (30); and
a second common electrode (34) on the fourth substrate (31).

5. The display device according to claim 4, further comprising:
a first driver (50) configured to apply voltages to the first display electrode (22) and the first common electrode (26); and
a second driver (51) configured to apply voltages to the second display electrode (33) and the second common electrode (34).

## Patentansprüche

1. Anzeigevorrichtung (10), die für ein Fahrzeug geeignet ist, aufweisend:
eine erste Anzeigeplatte (11), die ein elektrochromes Element enthält und so konfiguriert ist, dass sie entweder einen Farbzustand zur Ausführung einer Farbanzeige oder einen durchlässigen Zustand zeigt;
eine zweite Anzeigeplatte (12), die ein polymerdispergiertes Flüssigkristallelement enthält, auf der ersten Anzeigeplatte (11) aufliegt und so konfiguriert ist, dass sie entweder einen Streuzustand zur Lichtstreuung oder einen durchlässigen Zustand zeigt;
einen Zwischenraum (15) zwischen der ersten Anzeigeplatte (11) und der zweiten Anzeigeplatte (12);
eine Lichtquelleneinheit (13), die zwischen der ersten Anzeigeplatte (11) und der zweiten Anzeigeplatte (12) in einem Seitenbereich des Zwischenraums oder an den Zwischenraum angrenzend vorgesehen ist, sodass die Lichtquelleneinheit (13) ausgebildet ist, Licht an die zweite Anzeigeplatte (12) zu emittieren;
einen Beleuchtungsstärkesensor (54), der zur Messung der Beleuchtungsstärke ausgebildet ist; und
eine Steuerschaltung (52), die ausgebildet ist, einen ersten Modus, einen zweiten Modus und einen dritten Modus gemäß einem Messergebnis durch den Beleuchtungsstärkesensor (54) auszuführen, wobei:
im ersten Modus die erste Anzeigeplatte (11) eine Farbanzeige ausführt, die zweite Anzeigeplatte (12) in einen Streuzustand gesetzt ist und die Lichtquelleneinheit (13) ausgeschaltet ist;
im zweiten Modus die erste Anzeigeplatte (11) eine Farbanzeige ausführt, die zweite Anzeigeplatte (12) in einen durchlässigen Zustand gesetzt ist und die Lichtquelleneinheit (13) ausgeschaltet ist; und
im dritten Modus die erste Anzeigeplatte (11) eine Farbanzeige durchführt, die zweite Anzeigeplatte (12) in einen Streuzustand versetzt ist und die Lichtquelleneinheit (13) eingeschaltet ist.

2. Anzeigevorrichtung nach Anspruch 1, weiterhin aufweisend ein Versiegelungsglied (14), das die erste Anzeigeplatte (11) und die zweite Anzeigeplatte (12) miteinander verklebt.

3. Anzeigevorrichtung nach Anspruch 1, wobei die Lichtquelleneinheit (13) ein Seitenlicht ist, das eine seitliche Beleuchtung zur Verfügung stellt.

4. Anzeigevorrichtung nach Anspruch 1, wobei
die erste Anzeigeplatte (11) aufweist:
ein erstes Substrat (20) und ein zweites Substrat (21);
eine erste Anzeigeelektrode (22) auf dem ersten Substrat (20);
eine erste elektrochrome Schicht (23) auf der ersten Anzeigeelektrode (22);
eine elektrolytische Schicht (24) auf der ersten elektrochromen Schicht (23);
eine zweite elektrochrome Schicht (25) auf der Elektrolytschicht (24); und
eine erste gemeinsame Elektrode (26) auf dem zweiten Substrat (20), die erste gemeinsame Elektrode (26) kontaktiert die zweite elektrochrome Schicht (25); und die zweite Anzeigeplatte (12) weist auf:
ein drittes Substrat (30) und ein viertes Substrat (31);
eine polymerdispergierte Flüssigkristallschicht (32) zwischen dem dritten Substrat und dem vierten Substrat (30, 31);
eine zweite Anzeigeelektrode (33) auf dem dritten Substrat (30); und
eine zweite gemeinsame Elektrode (34) auf dem vierten Substrat (31).

5. Anzeigevorrichtung nach Anspruch 4, weiter aufweisenden:
einen ersten Treiber (50), der konfiguriert ist, um Spannungen an die erste Anzeigeelektrode (22) und die erste gemeinsame Elektrode (26) anzulegen; und
einen zweiten Treiber (51), der konfiguriert ist, Spannungen an die zweite Anzeigeelektrode (33) und die zweite gemeinsame Elektrode (34) anzulegen.

## Revendications

1. Dispositif d'affichage (10) pour un véhicule et comprenant :
un premier panneau d'affichage (11) qui comporte un élément électrochromique et est configuré pour présenter un état de couleur pour effectuer un affichage en couleur ou un état de transmission :
un deuxième panneau d'affichage (12) qui comporte un élément à cristaux liquides dispersés dans un polymère, est empilé sur le premier panneau d'affichage (11), et est configuré pour présenter soit un état de diffusion pour diffuser la lumière, soit un état de transmission ;
un espace (15) entre le premier panneau d'affichage (11) et le deuxième panneau d'affichage (12) ;
une unité de source de lumière (13) étant située soit entre le premier panneau d'affichage (11) et le deuxième panneau d'affichage (12) sur une partie latérale de l'espace ou adjacente à l'espace, de sorte que l'unité de source de lumière (13) soit configurée pour émettre de la lumière vers le deuxième panneau d'affichage (12) ;
un capteur d'éclairement (54) configuré pour mesurer l'éclairement ; et
un circuit de commande (52) configuré pour exécuter un premier mode, un deuxième mode et un troisième mode selon un résultat de mesure par le capteur d'éclairement (54), où :
dans le premier mode, le premier panneau d'affichage (11) effectue un affichage en couleur, le deuxième panneau d'affichage (12) est réglé sur un état de diffusion, et l'unité de source de lumière (13) est désactivée ;
dans le deuxième mode, le premier panneau d'affichage (11) effectue un affichage en couleur, le deuxième panneau d'affichage (12) est réglé sur un état de transmission et l'unité de source de lumière (13) est désactivée ; et
dans le troisième mode, le premier panneau d'affichage (11) effectue un affichage en couleur, le deuxième panneau d'affichage (12) est réglé sur un état de diffusion, et l'unité de source de lumière (13) est activée.

2. Dispositif d'affichage selon la revendication 1, comprenant en outre un élément d'étanchéité (14) qui relie le premier panneau d'affichage (11) et le deuxième panneau d'affichage (12) ensemble.

3. Dispositif d'affichage selon la revendication 1, dans lequel l'unité de source de lumière (13) est un feu latéral qui fournit un éclairage latéral.

4. Dispositif d'affichage selon la revendication 1, dans lequel :
le premier panneau d'affichage (11) comprend :
un premier substrat (20) et un deuxième substrat (21) ;
une première électrode d'affichage (22) sur le premier substrat (20) ;
une première couche électrochromique (23) sur la première électrode d'affichage (22) ;
une couche d'électrolyte (24) sur la première couche électrochromique (23) ;
une deuxième couche électrochromique (25) sur la couche d'électrolyte (24) ; et
une première électrode commune (26) sur le deuxième substrat (20), la première électrode commune (26) étant en contact avec la deuxième couche électrochromique (25) ; et
le deuxième panneau d'affichage (12) comprend :
un troisième substrat (30) et un quatrième substrat (31) ;
une couche de cristaux liquides dispersés dans un polymère (32) entre le troisième substrat et le quatrième substrat (30, 31) ;
une deuxième électrode d'affichage (33) sur le troisième substrat (30) ; et
une deuxième électrode commune (34) sur le quatrième substrat (31).

5. Dispositif d'affichage selon la revendication 4, comprenant en outre :
un premier pilote (50) configuré pour appliquer des tensions à la première électrode d'affichage (22) et à la première électrode commune (26) ; et
un deuxième pilote (51) configuré pour appliquer des tensions à la deuxième électrode d'affichage (33) et à la deuxième électrode commune (34).
